Europäisches Patentamt

European Patent Office

Office européen des brevets

(19)

(11) Publication number: **0 357 576**
A2

# (12) EUROPEAN PATENT APPLICATION

(21) Application number: **89850262.0**

(22) Date of filing: **21.08.89**

(51) Int. Cl.⁵: **E 03 B 11/02**
E 03 F 5/10, B 60 R 15/00

(30) Priority: **29.08.88 SE 8803004**

(43) Date of publication of application:
**07.03.90 Bulletin 90/10**

(84) Designated Contracting States:
**AT BE CH DE ES FR GB GR IT LI LU NL**

(71) Applicant: **BORAS FRITIDSPRODUKTER**
**Finkgatan 11**
**S-510 54 Brämhult (SE)**

(72) Inventor: **Johansson, Sören**
**Finkgatan 11**
**S-510 54 Brämhult (SE)**

(74) Representative: **Mossmark, Anders et al**
**Albihn West AB Box 142**
**S-401 22 Göteborg (SE)**

(54) **A water container.**

(57) A water container (10) for simultaneous handling and storage of fresh- and wastewater in two separate sacks in a common, by walls (11-16) defined room. The container (10) is provided with a set of quick couplings (17, 18) arranged in parallel with nonreturn valves (19, 20) for attachment of conduits for supply of freshwater and for discharge of wastewater - wherein the consumption of freshwater balances the increase in wastewater -, and ejector means (37, 38). Said ejector means are adapted to be activated by the expansion pressure in the freshwater sack and arranged to act in a direction substantially in parallel with the longitudinal axes of said quick couplings.

FIG.1

Bundesdruckerei Berlin

**Description**

## A WATER CONTAINER

The present invention relates to a water container for simultaneous handling and storage of fresh- and wastewater in two separate sacks in a common, by walls defined room.

A common problem with, for example, caravan or trailer camping, is collection and deposition of the wastewater from cooking of food, washing-up and other cleaning. The collection of wastewater can take place in an inner fixed tank in the caravan. After a while the contents of the wastewater tank must be tapped over to a portable container for discharging. The provision of two separate fixed tanks for fresh- and wastewater is relatively space and weight consuming in a caravan.

Alternatively, portable tanks are available, which are placed on the outside under the caravan and connected to a wastewater outlet. This arrangement reduces the amount of space needed within the caravan, but a tank lying on the ground below the caravan often gets dirty and has to be cleaned in order to be acceptable for transport inside the caravan. Also, problems often arise in the winter, when the wastewater may freeze.

Further, the handling of separate containers for fresh- and wastewater on camping sites means that large amounts of fluid has to be moved in a comparatively non-ergonomic way, both to and fro each caravan. Usually, a camping site is equipped with a number of waterposts having a water tap with a piece of flexible tube, and a wastewater gully. The wastewater will be discharged from the wastewater container into said gully, and freshwater is filled into the fresh water container, wherein the freshwater tube often is so long that its end can lie on the wastewater gully and therefore be polluted.

The object of the present invention is to provide a water container which saves storage space and facilitates the handling of fresh- and wastewater, for example in caravans and house cars.

For this object, the present invention is characterized in that the container is provided with a set of quick couplings arranged in parallel with nonreturn valves for attachment of conduits for supply of freshwater and for discharge of wastewater, and ejector means which are adapted to be activated by the expansion pressure in the freshwater sack when said pressure reaches a certain level, and arranged to act in a direction substantially in parallel with the longitudinal axes of said quick couplings.

According to one preferable embodiment of the invention, the ejector means comprises a movable plate at the inside of one of the walls, said plate being provided with at least one push rod extending through at least one opening in the container wall to the outside.

Preferably, the container is provided with wheels and a handle.

The water container is preferably arranged to be docked into a compartment within a movable unit with conduit coupling means adapted to said quick couplings, for simultaneous replenishment of freshwater and discharge of wastewater.

A stationary unit for docking a water container for simultaneous handling and storage of fresh- and wastewater i two separate sacks in a common compartment defined by walls, is characterized in conduit coupling means adapted to the quick couplings for simultaneous replenishment of freshwater and discharge of wastewater and abutment means, against which the push rods of the ejector means are arranged to act for release of the quick couplings, when the freshwater sack is filled.

The above mentioned and further features of the invention will be described in more detail in the following, with reference to the accompanying drawings, in which

Fig. 1 is a side view of a water container according to the present invention,

Fig. 2 is a section along the line II-II i Fig. 1,

Fig. 3 and 4 show a water container during replenishment of freshwater and discharge of wastewater in a fixed docking unit, in a side view and an end view respectively, and

Fig. 5 and 6 correspondingly show a water container during tapping of freshwater and filling of wastewater.

The water container 10 shown in the drawings has cubical form with six outer walls 11-16, wherein the wall 11 is provided with quick couplings 17, 18 arranged in parallel for attachment of conduits. These quick couplings are of the male type and provided with inner nonreturn valves 19 and 20 respectively, both closing in the outlet direction of the container. The container 10 is at one of its ends, adjacent the wall 14, provided with a couple of wheels 22 rotatable journalled on the same shaft 21. This wall also is provided with a support 23 at the opposite end of the container.

The opposite wall 13 is provided with a tube 24, which incorporates a telescopic handle 25. With the help of this handle, the container may be tilted up on the wheels 22, with the wall 11 which is provided with the quick couplings facing upwards, and be pushed or pulled forth on the ground.

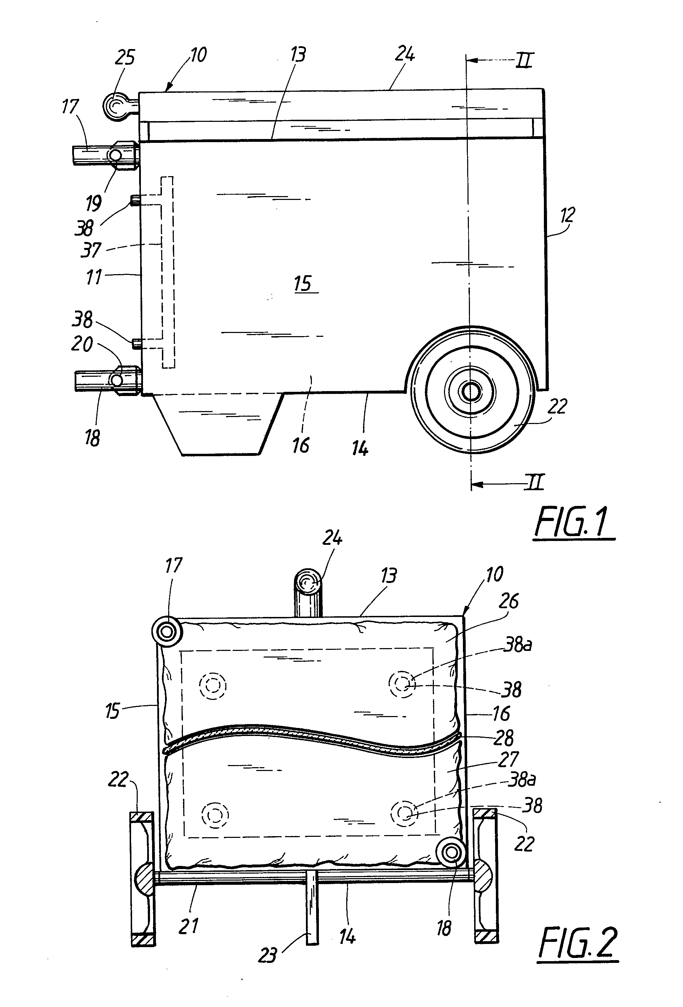

The outer walls 11-16 of the container houses two separate fluid sacks 26 and 27, each having the capacity to fill out the entire space defined by said outer walls. The upper sack 26 in Fig. 2 is connected to the upper left quick coupling 17, while the second, lower sack 27 is connected to the lower right quick coupling 18. The sacks are separated by means of a flexible plate 28 of thermally insulating material.

In a functional embodiment of the invention, adapted for use in a caravan, each of the sacks 26 and 27 contains about 25 liters, however not simultaneously, as the maximum capacity of the container space also is about 25 liters. The use of the container is however based on the knowledge that a certain amount of freshwater, after use for cooking and washing up, always results in a smaller amount of wastewater. The reason for this is naturally that some of the freshwater is consumed by drinking.

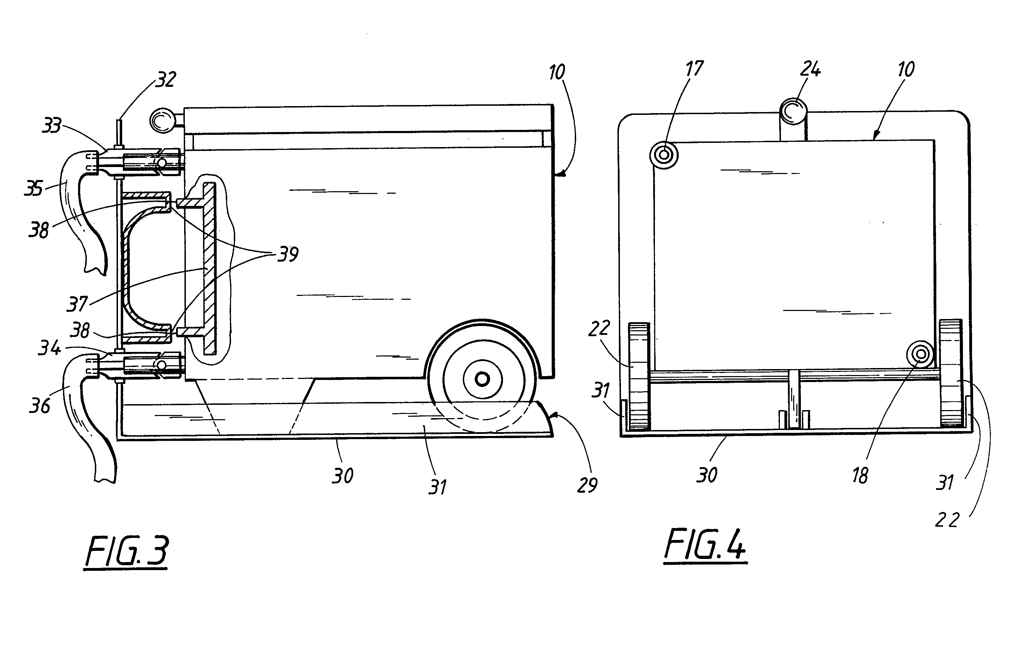

Consequently, it is possible to fill the freshwater sack 27 completely and then let the wastewater flow back to the container wastewater sack 26, in pace with the consumption of freshwater. When the freshwater has been consumed, the container can be moved on its wheels 22 to a fixed docking unit 29 shown in Fig. 3 and 4.

The docking unit 29 comprises a docking space which is defined by a bottom surface 30, two low side walls 31 and an end wall 32. This end wall 32 is provided with two female quick couplings 33, 34 which are positioned so that they are in line with the positions of the male quick couplings 17, 18 on the water container 10 end wall 11. The quick coupling with the nonreturn valve 34 is connected via a hose 36 to the water mains system. The quick coupling with the nonreturn valve 33 is connected via a hose 35 to a wastewater gully.

When the container 10 filled with wastewater is docked into the docking unit 29, the nonreturn valve 19 in the quick coupling 17 is forced open and the wastewater sack 26 is connected to the wastewater conduit 35. Simultaneously the connection is opened between the water mains system and the freshwater sack 27. The pressure of the water mains is capable of pressing out the contents of the wastewater sack, simultaneously as the freshwater sack is filled.

When the freshwater sack starts to approach its maximum volume, it will start to press upon the walls of the container. Now the sack 27 will start to act upon a movable plate 37 at the inside of the container wall 11. The plate 37 is provided with four push rods 38 extending through openings in the wall 11 to the outside. The push rods 38 are arranged to act against an abutment means 39 protruding from the wall 32 in the docking unit 29. As a result of the action of the push rods 38 against the abutment means 39, a displacement of the water container 10 takes place, substantially in parallel with the longitudinal direction of the quick couplings, so that the male and female coupling means are separated. The nonreturn valves 18, 19 are now immediately closed. The quick couplings 33 and 34 are also provided with nonreturn valves. The force acting upon the push rods is depending upon the area of the plate 37. In a realistic embodiment of the invention, the force may amount to about 650 N, at a pressure of 0,1 bar in the container.

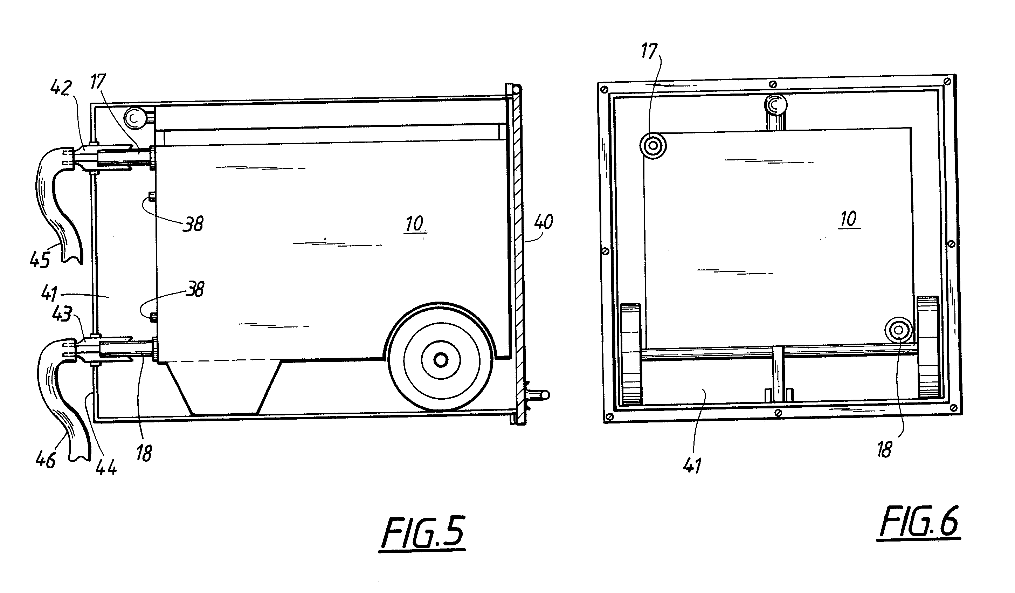

The water container filled in this way with freshwater, will be transported upon its own wheels 22 to a movable unit shown in Fig. 5 and 6, which is mounted in a camping caravan or a house car. In this respect, the water container is preferably mounted in a frost free compartment 41 placed behind a shutter 40. Quick couplings 42 and 43 are arranged at one of the walls 44 of the compartment and connected to an outlet conduit 46 for freshwater and a supply conduit 45 for wastewater.

The shell of the water container is preferably made comparatively economical by injection moulding or blow moulding of a plastic material. The sacks 26, 27 are preferably made by welding of a laminated plastic film.

Owing to its double function as both freshwater and wastewater tank, the above described water container needs relatively little space in e.g. a caravan. The filling of freshwater and discharge of wastewater can be done quickly and efficiently as this happens simultaneously, forcedly and with automatic stop when full freshwater volume has been reached. On account of the automatic stop function, the water container according to the present invention can be produced at low cost and efficiently, since the container does not have to be dimensioned for high water pressure.

The invention is not limited to the above described embodiment, but several modifications are possible within the scope of the accompanying claims. For example, the outer walls of the water container may be designed differently than shown. The ejector mechanism can be designed in several other ways, i.e. with pivotally arranged arms protruding from the inside of the container. The male and female quick coupling means may be reversed in comparison with the above described embodiment. The quick coupling 18 belonging to the freshwater sack 27 can also be provided with a twin coupling and an inner by-pass valve, which is adapted to lead surplus water to the wastewater gully, when the freshwater sack is being filled.

## Claims

1. A water container (10) for simultaneous handling and storage of fresh- and wastewater in two separate sacks (26, 27) in a common, by walls (11-16) defined room, **characterized** in that the container (10) is provided with a set of quick couplings (17, 18) arranged in parallel with nonreturn valves (19, 20) for attachment of conduits for supply of freshwater and for discharge of wastewater, and ejector means (37, 38), which are adapted to be activated by the expansion pressure in the freshwater sack (27) when said pressure reaches a certain level, and arranged to act in a direction substantially in parallel with the longitudinal axes of said quick couplings.

2. A water container according to claim 1, **characterized** in that the ejector means comprises a movable plate (37) at the inside of one of the walls (11), said plate being provided with at least one push rod (38) extending through at least one opening (38a) in the container wall (11) to the outside.

3. A water container according to claim 1 or 2, **characterized** in that it is provided with wheels (22) and a handle (25).

4. A water container according to any one of claims 1 to 3, **characterized** in that it is arranged to be docked into a compartment (41) within a movable unit with conduit coupling means (42, 43), adapted to said quick couplings (17, 18), for simultaneous replenishment of freshwater and discharge of wastewater.

5. A stationary unit (29) for docking a water container (10) for simultaneous handling and storage of fresh- and wastewater i two separate sacks (27, 26) in a common compartment defined by walls (11-16), **characterized** in conduit coupling means (33, 34) adapted to the quick couplings (17, 18) for simultaneous replenishment of freshwater and discharge of wastewater and abutment means (39), against which the push rods (38) of the ejector means (37) are arranged to act for release of the quick couplings (17, 18), when the freshwater sack (27) is filled.

_FIG.1_

_FIG.2_

FIG.4

FIG.3

_FIG.5_

_FIG.6_

EP 0 357 576 A2